# EUROPÄISCHE PATENTANMELDUNG

(11) **EP 2 562 419 A1**
(43) Veröffentlichungstag der Anmeldung: **27.02.2013**
(21) Anmeldenummer: 11006970.5
(22) Anmeldetag: 26.08.2011
(51) Int. Cl.: F03D 11/04

(54) **Turm für eine Windenergieanlage**

(71) Anmelder: Nordex Energy GmbH, 22419 Hamburg (DE)
(72) Erfinder: Stopper, Juliane, 21337 Lüneburg (DE); Bussinow, Philipp, 22767 Hamburg (DE)
(74) Vertreter: Schildberg, Peter

(57) **Zusammenfassung**

Turm für eine Windenergieanlage, der mehrere in Längsrichtung des Turms übereinander angeordnete Turmsegmente (10, 12, 14) aufweist, von denen eines der als ein vollständig umlaufendes Segment mit einer Öffnung (15) in seiner Umfangswand ausgebildet ist, wobei das mit der Öffnung (15) versehene Segment (12) zwei übereinander angeordnete Bereiche aufweist, von denen ein erster Bereich (16) mit einer ersten Wandstärke und ein zweiter Bereich (18) mit einer zweiten Wandstärke ausgebildet und der zweite Bereich durch die Öffnung (15) unterbrochen ist, wobei die zweite Wandstärke kleiner als die erste Wandstärke ist.

## Beschreibung

Die vorliegende Erfindung betrifft einen Turm für eine Windenergieanlage, der mehrere in Längsrichtung des Turms übereinander angeordnete Segmente aufweist.

Aus EP 1 856 410 B1 ist ein Turmteil für eine Windenergieanlage bekannt geworden, das wenigstens ein Wandsegment und wenigstens ein Öffnungssegment mit einer Öffnung aufweist. Das Wandsegment und das Öffnungssegment sind durch Verbindungsmittel miteinander verbunden, wobei das Öffnungssegment eine im Wesentlichen gleichförmige Dicke besitzt und dicker als die Dicke des Wandsegments ausgebildet ist. Das nicht vollständig umlaufende Wandsegment wird durch das Öffnungssegment derart ergänzt, dass ein vollständig umlaufender 360°-Ring entsteht.

Aus DE 20 2009 015 675 U1 ist ein Turmsegment für eine Windenergieanlage bekannt geworden, das eine rohrförmige Umfangswand aufweist, in die eine Öffnung eingelassen ist. In dem Bereich um die Öffnung ist die Wand verstärkt, um die durch die Öffnung bewirkte Schwächung zu kompensieren, wobei das Turmsegment aus einem Blechzuschnitt hergestellt ist, der als ein einheitliches Stück mit einem Bereich erhöhter Materialdicke in der Region um die Öffnung geformt ist.

Von der Firma ecotèchnia ist ein Turm für eine Windenergieanlage benutzt worden, bei dem in ein vollständig umlaufendes, röhrenförmiges Wandsegment eine rechteckige Öffnung eingebracht wurde. In die rechteckige Öffnung wurde ein Öffnungssegment mit einer rechteckigen Form eingeschweißt, das eine ovale Türöffnung mit einer umlaufenden Türzarge besitzt. Die Wandstärke des Öffnungssegments ist größer als die Wandstärke des röhrenförmigen Wandsegments.

Aus EP 0 066 340 ist ein Lichtmast bekannt, der in seinem unteren Abschnitt eine mit einer Tür verschließbare Öffnung besitzt. Zur Verstärkung wird im Bereich der Öffnung von innen ein nicht vollständig umlaufendes Wandsegment eingesetzt, das eine allseitig umgrenzte Öffnung für eine Tür aufweist.

Aus DE 35 04 840 A1 ist eine Verstärkungsvorrichtung für einen Stahlrohrmast bekannt geworden, bei der in einem Stahlrohrsegment eine Türöffnung vorgesehen ist. In dem Bereich um die Türöffnung ist ein umlaufender Rahmen auf das Rohrmastsegment aufgesetzt.

I. Lavassas et al. beschreiben in "Analysis and Design of the Prototype of a Steel 1-MW Wind Turbine Tower" eine Turmmastkonstruktion, bei der in ein vollständig umlaufendes Turmsegment eine Türöffnung eingelassen ist. Im Bereich der Türöffnung wird eine die Türöffnung umgebende Versteifungsstruktur angebracht, die sich über die gesamte Höhe des Turmsegments erstreckt und einen die Türöffnung umgebenden Rahmen besitzt. Der Rahmen ist mit in Längsrichtung des Turmsegments verlaufenden Versteifungsstreben über Umfangsstreben verbunden.

Der Erfindung liegt die Aufgabe zugrunde, einen Turm für eine Windenergieanlage bereitzustellen, der eine Türöffnung besitzt, wobei die durch die Türöffnung hervorgerufene Schwächung des Turms mit möglichst einfachen Mitteln ausgeglichen wird.

Erfindungsgemäß wird die Aufgabe durch einen Turm für eine Windenergieanlage mit den Merkmalen aus Anspruch 1 gelöst. Vorteilhafte Ausgestaltungen bilden die Gegenstände der Unteransprüche.

Der erfindungsgemäße Turm ist vorgesehen und bestimmt für eine Windenergieanlage. Der Turm ist aus mehreren in Längsrichtung des Turms übereinander angeordnete Turmsegmente gebildet. Die Turmsegmente können je nach Ausgestaltung vollständig umlaufende, röhrenförmige Segmente sein oder aus Segmentabschnitten gebildet werden, die an vertikalen Stößen miteinander verbunden sind. Erfindungsgemäß ist eines der Segmente des Turms als ein vollständig umlaufendes Segment ausgebildet, das eine Öffnung in seiner Umfangswand besitzt. Die Öffnung ist vorgesehen, um den Turm der Windenergieanlage betreten und erforderlichenfalls Komponenten in den Turm hineinbringen oder aus dem Turm entfernen zu können. Das mit der Öffnung versehene Segment besitzt zwei übereinander angeordnete Bereiche, von denen ein erster Bereich mit einer ersten Wandstärke und ein zweiter Bereich mit einer zweiten Wandstärke ausgebildet ist, wobei der zweite Bereich durch die Öffnung unterbrochen ist. Das vollständige umlaufende Segment mit der Öffnung besitzt also einen zweiten Bereich, der durch die Öffnung unterbrochen ist. Erfindungsgemäß ist die zweite Wandstärke im Bereich der Öffnung kleiner als die erste Wandstärke. Bei dem erfindungsgemäßen Turm ist ein vollständig umlaufendes Turmsegment mit einer Öffnung vorgesehen, wobei die Wandstärke in dem zweiten Bereich, der aufgrund der Öffnung zumindest teilweise nicht vollständig umläuft, kleiner als in dem ersten Bereich ist, der vollständig umläuft. Der erfindungsgemäße Ansatz zur Einbringung einer Öffnung in das Turmsegment unterscheidet sich grundlegend von dem aus dem Stand der Technik bekannten Ansätzen. Bei den bekannten Ansätzen wurde stets versucht, das mit einer Öffnung versehene Segment des Turms im Bereich um die Öffnung durch zusätzliches Material zu verstärken. Bei der erfindungsgemäßen Lösung ist ein Turmsegment vorgesehen, das einen ersten umlaufenden Bereich besitzt, in dem eine größere Wandstärke vorliegt, als in dem nicht vollständig umlaufenden zweiten Bereich, der mit der Türöffnung versehen ist. Diesem Ansatz liegt die Erkenntnis zugrunde, dass die aufgrund der Windlasten und der Drehbewegung des Rotors in dem Turm eingetragenen Beanspruchungen im Bereich des Turmsegments, wo regelmäßig die Türöffnung vorgesehen ist, am größten sind. Durch die Öffnung im Turmblech entstehen im Bereich der Tür sehr hohe Spannungen im Material, denn die äußeren Lasten müssen hier um das fehlende Material "herumwandern" und werden auf einen engeren Bereich zusammen gezwängt. Durch eine einseitige Versteifung des Turmsegments im Bereich der Türöffnung entsteht eine ungleiche Steifigkeit des unteren Turmsegments, die zu unsymmetrischen Beanspruchungen des Turmsegments führt. Mit dem erfindungsgemäßen Ansatz, einen Bereich mit größerer Wandstärke vollständig umlaufend auszubilden und einen nicht vollständig umlaufenden Bereich mit geringerer Wandstärke vorzusehen, entsteht eine Steifigkeit des Turmsegments, die auch periodisch angreifenden Kräften gut standhält.

In einer bevorzugten Ausgestaltung ist der zweite, durch die Öffnung unterbrochene Bereich nicht vollständig umlaufend. Die im zweiten Bereich eingebrachte Öffnung erstreckt sich also bei dieser Ausgestaltung in Längsrichtung des Turms über die gesamte Höhe des zweiten Bereichs.

In einer besonders bevorzugten Ausgestaltung ist der erste Bereich vollständig umlaufend als Anschlussbereich für ein in Längsrichtung des Turms nachfolgendes Turmsegment ausgebildet. Dies bedeutet, dass das in Längsrichtung des Turms auf das Turmsegment mit der Öffnung nachfolgende Turmsegment im ersten Bereich auf dieses aufgesetzt und mit dem ersten Bereich verbunden ist. Der erste Bereich mit seiner größeren Wandstärke bildet also einen Anschlussbereich für ein nachfolgendes Turmsegment.

In einer weiteren bevorzugten Ausgestaltung besitzt der erste Bereich in einem Übergang zum zweiten Bereich eine Aussparung, die bevorzugt bogenförmig ausgebildet ist, wobei die Aussparung einen Abschnitt der Öffnung in dem zweiten Bereich ergänzt. Die Türöffnung in dem Turmsegment wird durch die Öffnung im zweiten Bereich des Turmsegments gebildet und durch die Aussparung im ersten Bereich des Turmsegments ergänzt.

Bevorzugt ist in der Aussparung des ersten Bereichs ein mindestens teilweise in Umfangsrichtung verlaufendes Versteifungselement vorgesehen. Das Versteifungselement erstreckt sich durch die Aussparung hindurch und verläuft somit mindestens teilweise in Umfangsrichtung, wobei es sich in unterschiedlicher oder konstanter Höhe durch die Aussparung erstrecken kann.

Aus Stabilitätsgründen hat es sich als besonders vorteilhaft erwiesen, dass die Außenseite der Wand des zweiten Bereichs in radialer Richtung weiter innen angeordnet ist als die Außenseite der Wand des ersten Bereichs. In dieser Ausgestaltung springt die Wand des zweiten Bereichs auf der Außenseite zurück gegenüber der Wand des ersten Bereichs. Ebenso kann die Innenseite der Wand des zweiten Bereichs in radialer Richtung weiter außen als die Innenseite der Wand des ersten Bereichs angeordnet sein. In dieser Ausgestaltung steht die Wand des zweiten Bereichs gegenüber der Wand des ersten Bereichs zurück, so dass ein Absatz im Übergangsbereich entsteht. Der Absatz kann bevorzugt eine Schräge aufweisen.

In einer bevorzugten Ausgestaltung besitzt das mit der Öffnung versehene Segment einen dritten Bereich mit einer dritten Wandstärke, wobei der dritte Bereich vollständig umlaufend ausgebildet ist. Bevorzugt ist die dritte Wandstärke größer als die zweite Wandstärke. In dieser Ausgestaltung ist der zweite Bereich mit seiner geringeren Wandstärke umgeben von zwei Bereichen, dem ersten Bereich und dem dritten Bereich, die eine größere Wandstärke besitzen. Die dritte Wandstärke kann aber auch gleich der zweiten Wandstärke sein.

In einer bevorzugten Ausgestaltung besitzt der dritte Bereich im Übergang zum zweiten Bereich eine einen Abschnitt der Öffnung bildende Aussparung. Bei dieser Aussparung wird die Türöffnung durch die Öffnung im zweiten Bereich und die angrenzende Aussparung im dritten Bereich gebildet, wobei die Türöffnung auch durch die Aussparung im ersten Bereich weiter vergrößert wird. In der Aussparung im dritten Bereich kann ein die Aussparung überbrückendes Versteifungselement vorgesehen sein.

In einer bevorzugten Ausgestaltung besitzt der zweite Bereich mit der zweiten Wandstärke eine konstante Höhe in Turmlängsrichtung.

In einer weiteren bevorzugten Ausgestaltung ist der Übergang zwischen dem zweiten Bereich und dem dritten Bereich identisch wie der Übergang zwischen dem zweiten Bereich und dem ersten Bereich ausgebildet. Dies bedeutet, dass der zweite Bereich auch radial nach innen oder nach außen vor- bzw. zurücksteht gegenüber dem angrenzenden dritten Bereich.

In einer bevorzugten Ausgestaltung ist die Wandstärke im zweiten Bereich des mit der Öffnung versehenen Turmsegments geringer oder gleich der Wandstärke eines der angrenzenden Turmsegmente. Dies bedeutet, dass der mit der Öffnung versehene zweite Bereich eine Wandstärke besitzt, die der Wandstärke eines angrenzenden Turmsegments entspricht. Somit ist der erste Bereich des mit der Öffnung versehenen Turmsegments mit einer größeren Wandstärke ausgestattet, als die Wandstärke eines angrenzenden Turmsegments.

In einer möglichen Ausgestaltung kann die Öffnung sich in Längsrichtung des Turms nicht über die gesamte Höhe des zweiten Bereichs erstrecken. Der zweite Bereich ist also in Längsrichtung des Turms höher ausgebildet, als die in dem zweiten Bereich eingebrachte Öffnung. Bei dieser Ausgestaltung bleibt oberhalb und/oder unterhalb der Öffnung ein Teil des zweiten Bereichs des Turmsegments stehen.

In einer weiteren Ausgestaltung kann auch in der Öffnung im zweiten Bereich ein mindestens teilweise in Umfangsrichtung verlaufendes Versteifungselement vorgesehen sein.

Bevorzugte Ausgestaltungen des erfindungsgemäßen Turms werden nachfolgend anhand von Figuren näher erläutert. Es zeigt:
- Fig. 1: eine schematische Darstellung einer Windenergieanlage,
- Fig. 2: einen Ausschnitt eines Turms für eine Windenergieanlage mit einem Turmsegment, das eine Türöffnung besitzt,
- Fig. 3: einen Schnitt durch das Turmsegment aus Fig. 2, welcher durch die Türöffnung verläuft,
- Fig. 4: einen Ausschnitt eines Turms für eine Windenergieanlage mit einem Turmsegment mit Türöffnung in einer zweiten Ausgestaltung,
- Fig. 5: einen Schnitt durch das Turmsegment aus Fig. 4, welcher durch die Türöffnung verläuft und
- Fig. 6: einen Ausschnitt eines Turms für eine Windenergieanlage mit einem Turmsegment, das eine versteifte Türöffnung besitzt.

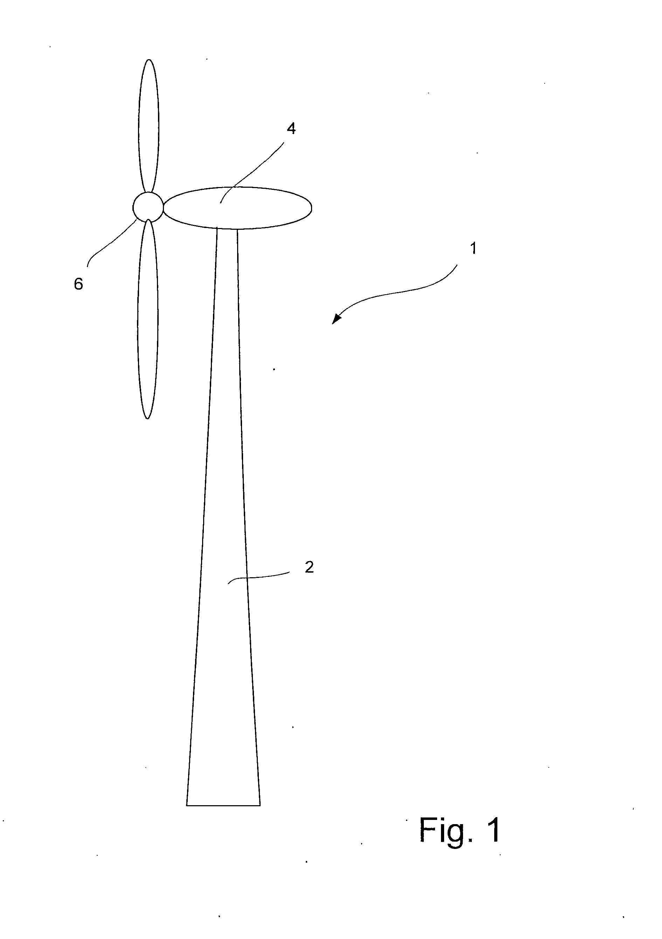

Fig. 1 zeigt die schematische Darstellung einer Windenergieanlage 1 mit einem Turm 2, einer Gondel 4 und einem Rotor 6.

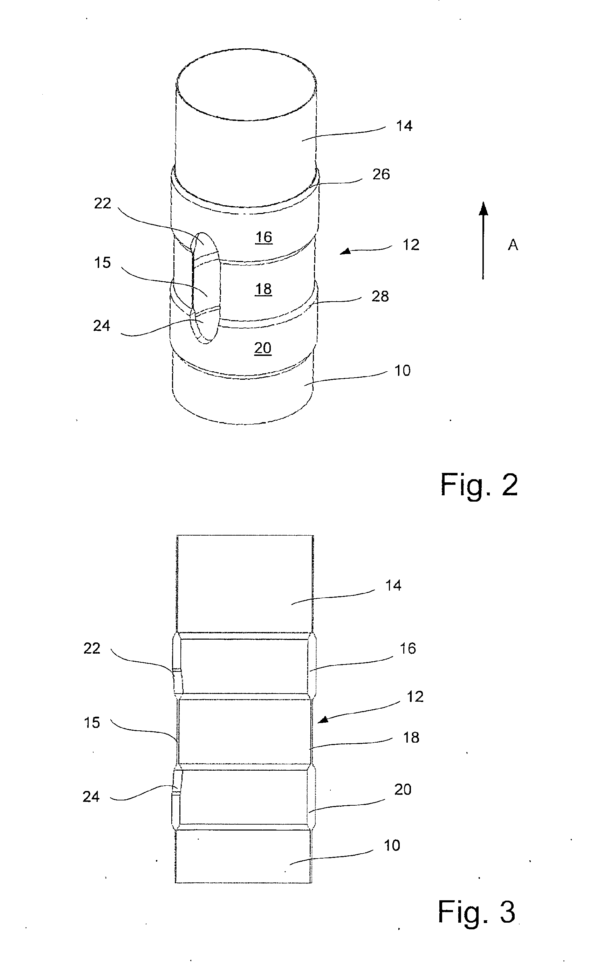

Fig. 2 zeigt einen Ausschnitt eines Turms für eine Windenergieanlage. Der Ausschnitt besitzt ein erstes, vollständig umlaufendes Turmsegment 10, auf das in Längsrichtung des Turms nach oben das mit einer Öffnung versehene Turmsegment 12 folgt. An das Turmsegment 12 schließt sich ein vollständig umlaufendes Turmsegment 14 an. Die Turmsegmente sind untereinander mit üblichen Befestigungsmitteln verbunden. Allgemein werden mehrere übereinander angeordnete Segmente auch als Turmsektionen bezeichnet, die in einem Stück zur Errichtung des Turms transportiert werden. In diesem Sinne sind die Segmente 10, 12, 14 einzelne Turmsektionen. Es ist aber auch möglich, diesen vorab zu verbinden oder einstückig auszubilden, so dass diese gemeinsam eine Turmsektion bilden. In dem dargestellten Ausführungsbeispiel sind die Turmsegmente 10 und 14 lediglich beispielhaft als vollständig umlaufende Segmente dargestellt. Es ist auch möglich, die Turmsegmente 10 und 14 aus einzelnen Segmentteilen zusammen zu setzen. An das Turmsegment 14 schließen sich in Richtung A weitere Turmsegmente an, um den Turm für die Windenergieanlage zu bilden. Das oberste Segment des Turms trägt die Gondel der Windenergieanlage.

Das Turmsegment 12 ist mit einer Öffnung 15 versehen, die einen Zugang zu dem Turm der Windenergieanlage und damit zur Gondel erlaubt.

Das mit einer Öffnung versehene Turmsegment 12 besitzt einen ersten Bereich 16, der vollständig umlaufend ausgebildet ist. Ferner besitzt das mit der Öffnung versehene Turmsegment 12 einen zweiten Bereich 18, der nicht vollständig umläuft und durch die Öffnung 15 unterbrochen ist. In dem dargestellten

Ausführungsbeispiel ist ferner ein dritter Bereich 20 vorgesehen, der wie der erste Bereich vollständig umlaufend ausgebildet ist. Der erste Bereich 16 und der dritte Bereich 20 besitzen jeweils eine Aussparung 22 und 24, die bogenförmig ausgebildet ist. Die Aussparungen 22 und 24 entsprechen in ihrer Breite der Breite der Öffnung 15 und schließen an die Öffnung 15 an, so dass insgesamt eine Öffnung 15 entsteht, die höher als die Höhe des zweiten Bereichs 18 ist.

Wie in Fig. 2 zu erkennen, ist die Wandstärke des ersten Bereichs 16 und des dritten Bereichs 20 größer als die Wandstärke im zweiten Bereich 18. Der Übergang wird durch eine angeschrägte Kante 26, 28 gebildet, die die Wand im zweiten Bereich 18 an den ersten Bereich 16 und den dritten Bereich 20 anschließt.

Das mit einer Öffnung versehene Segment 12 kann einstückig hergestellt sein. Auch ist es möglich, die Bereiche 16, 18 und 20 des Segments 12 separat auszubilden und miteinander zu verschweißen.

Fig. 3 zeigt einen Schnitt durch die Turmsegmente aus Fig. 2, der die Vergrößerung der Öffnung 15 durch die Aussparung 22 und 24 zeigt. Ebenfalls zu erkennen ist, dass die Wandstärke des ersten Bereichs 16 und des dritten Bereichs 20 größer als die Wandstärke im zweiten Bereich 18 und der Übergang zwischen den Wandbereichen durch angeschrägte Kanten gebildet wird.

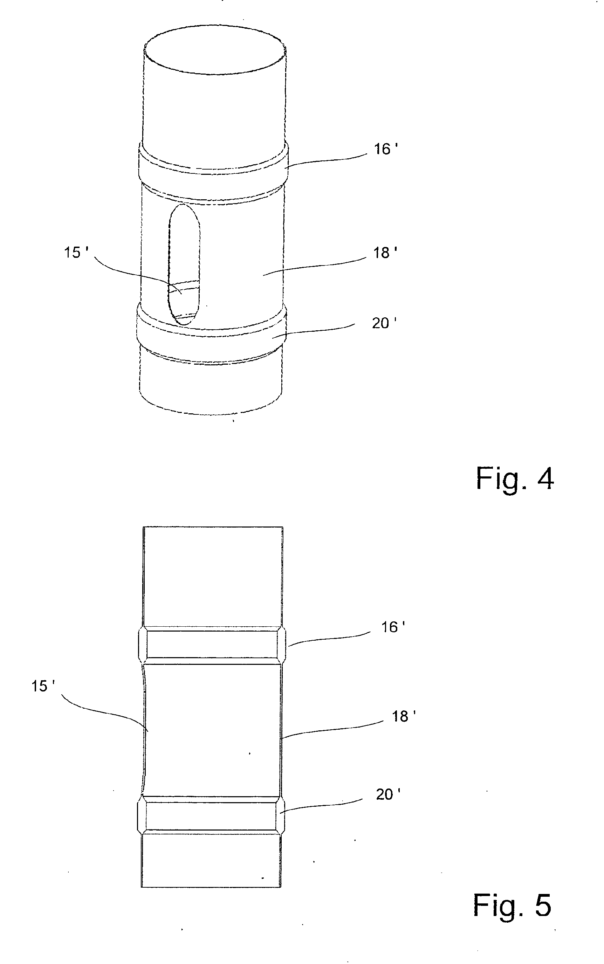

Fig. 4 zeigt eine alternative Ausgestaltung der Öffnung 15'. In dieser Ausgestaltung ist der zweite Bereich 18' höher ausgebildet, so dass die Öffnung 15' sich vollständig zwischen dem ersten Bereich 16' und dem dritten Bereich 20' erstreckt. In der in Fig. 4 dargestellten Ausgestaltung besitzen der erste Bereich 16' und der dritte Bereich 20' keine Aussparungen, sondern sind als mit konstanter Höhe vollständig umlaufende Bereiche ausgebildet.

Für die Wandstärke des ersten und gegebenenfalls des dritten Bereichs hat es sich als vorteilhaft herausgestellt, diese um mindestens 50 % gegenüber der Wandstärke des Turmsegments ohne Öffnung zu vergrößern.

Fig. 5 zeigt einen Schnitt durch die Turmsegmente aus Fig. 4, in dem zu erkennen ist, dass die Öffnung 15' sich über die gesamte Höhe des zweiten Bereichs 18' erstreckt und an den ersten und dritten Bereich 16', 20' direkt anschließt.

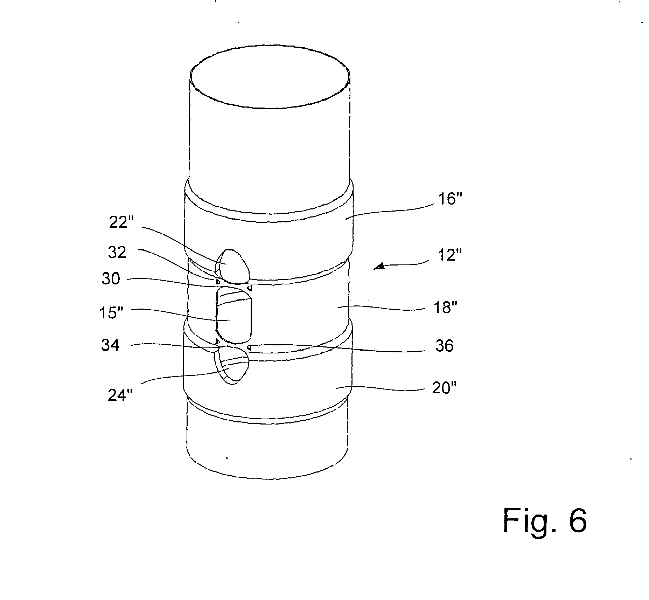

Fig. 6 zeigt in einer perspektivischen Darstellung eine weitere bevorzugte Ausgestaltung des erfindungsgemäßen Turmsegments. Das mit einer Öffnung versehene Turmsegment 12" besitzt einen ersten Bereich 16" und einen dritten Bereich 20", die jeweils mit Aussparungen 22" und 24" versehen sind. Die Aussparungen 22" und 24" ergänzen die in dem zweiten Bereich 18" vorgesehene Öffnung 15".

In dem Ausführungsbeispiel gemäß Fig. 6 ist im Übergang zwischen der Öffnung 15" und der Aussparung 22" eine als Versteifungselement ausgebildete Strebe 30 vorgesehen. Die Strebe 30 läuft in dem dargestellten Ausführungsbeispiel in den zweiten Bereich 18". Sie kann aber auch alternativ oder zusätzlich in den ersten Bereich 16" verlaufen. Die Strebe 30 besitzt an ihren Enden ein leicht verbreitertes Profil, das zusätzlich mit einer Durchbrechung 32 versehen ist.

Der zweite Bereich 18" besitzt eine zweite Strebe 34 im Übergangsbereich zu dem dritten Bereich 20". Die zweite Strebe 34 ist ebenfalls an ihren Enden mit Durchbrechungen 36 ausgestattet.

## Patentansprüche

1. Turm für eine Windenergieanlage, der mehrere in Längsrichtung des Turms übereinander angeordnete Turmsegmente (10, 12, 14) aufweist, von denen eines als ein vollständig umlaufendes Segment mit einer Öffnung (15) in seiner Umfangswand ausgebildet ist, wobei das mit der Öffnung (15) versehene Segment (12) zwei übereinander angeordnete Bereiche aufweist, von denen ein erster Bereich (16) mit einer ersten Wandstärke und ein zweiter Bereich (18) mit einer zweiten Wandstärke ausgebildet und der zweite Bereich durch die Öffnung (15) unterbrochen ist,
**dadurch gekennzeichnet, dass** die zweite Wandstärke kleiner als die erste Wandstärke ist.

2. Turm nach Anspruch 1, **dadurch gekennzeichnet, dass** der zweite Bereich durch die Öffnung unterbrochen nicht vollständig umläuft.

3. Turm nach Anspruch 1 oder 2, **dadurch gekennzeichnet, dass** der erste Bereich (16) vollständig umlaufend als Anschlussbereich für ein in Längsrichtung des Turms nachfolgendes Turmsegment (14) ausgebildet ist.

4. Turm nach einem der Ansprüche 1 bis 3, **dadurch gekennzeichnet, dass** der erste Bereich (16) im Übergang zum zweiten Bereich eine einen Abschnitt der Öffnung (15) bildende Aussparung (22) besitzt.

5. Turm nach Anspruch 4, **dadurch gekennzeichnet, dass** in der Aussparung des ersten Bereichs ein mindestens teilweise in Umfangsrichtung verlaufendes Versteifungselement vorgesehen ist.

6. Turm nach einem der Ansprüche 1 bis 5, **dadurch gekennzeichnet, dass** die Außenseite der Wand des zweiten Bereichs in radialer Richtung weiter innen angeordnet ist als die Außenwand des ersten Bereichs (16).

7. Turm nach einem der vorangegangenen Ansprüche, **dadurch gekennzeichnet, dass** die Innenseite der Wand des zweiten Bereichs in radialer Richtung weiter außen als die Innenseite der Wand des ersten Bereichs (16) angeordnet ist.

8. Turm nach einem der Ansprüche 1 bis 6, **dadurch gekennzeichnet, dass** das mit der Öffnung (15) versehene Turmsegment (12) einen dritten Bereich (20) mit einer dritten Wandstärke aufweist, wobei der dritte Bereich (20) vollständig umläuft.

9. Turm nach Anspruch 8, **dadurch gekennzeichnet, dass** die dritte Wandstärke größer als die zweite Wandstärke ist.

10. Turm nach Anspruch 8 oder 9, **dadurch gekennzeichnet, dass** der dritte Bereich (20) im Übergang zum zweiten Bereich eine einen Abschnitt der Öffnung (14) bildende Aussparung (24) besitzt.

11. Turm nach Anspruch 10, **dadurch gekennzeichnet, dass** in der Aussparung des dritten Bereichs ein mindestens teilweise in Umfangsrichtung verlaufendes Versteifungselement vorgesehen ist.

12. Turm nach einem der Ansprüche 8 bis 11, **dadurch gekennzeichnet, dass** der Übergang zwischen dem zweiten Bereich (18) und dem dritten Bereich (20) identisch wie der Übergang zwischen dem zweiten Bereich (18) und dem ersten Bereich (16) ausgebildet ist.

13. Turm nach einem der vorangegangenen Ansprüche, **dadurch gekennzeichnet, dass** die Wandstärke im zweiten Bereich des mit der Öffnung versehenen Turmsegments geringer oder gleich der Wandstärke eines der angrenzenden Turmsegmente (10, 14) ist.

14. Turm nach einem der vorangegangenen Ansprüche, **dadurch gekennzeichnet, dass** die Öffnung sich in Längsrichtung des Turms nicht über die gesamte Höhe des zweiten Bereichs erstreckt.

15. Turm nach einem der vorangegangenen Ansprüche, **dadurch gekennzeichnet, dass** in der Öffnung im zweiten Bereich ein mindestens teilweise in Umfangsrichtung verlaufendes Versteifungselement vorgesehen ist.
